**Europäisches Patentamt**

**European Patent Office**

**Office européen des brevets**

(19)

(11) Veröffentlichungsnummer: **0 112 572**
**B1**

(12)                **EUROPÄISCHE PATENTSCHRIFT**

(45) Veröffentlichungstag der Patentschrift:
**13.08.86**

(51) Int. Cl.⁴: **E 06 B 7/10,** E 06 B 9/17

(21) Anmeldenummer: **83113082.8**

(22) Anmeldetag: **23.12.83**

(54) **Umlaufende Einfassung für Türen oder Fenster, sowie Kastenbauteil, insbesondere Rolladenkasten, zur Verwendung oberhalb der Einfassung.**

(30) Priorität: **27.12.82 DE 3248226**

(43) Veröffentlichungstag der Anmeldung:
**04.07.84 Patentblatt 84/27**

(45) Bekanntmachung des Hinweises auf die Patenterteilung:
**13.08.86 Patentblatt 86/33**

(84) Benannte Vertragsstaaten:
**AT BE CH DE FR GB IT LI LU NL SE**

(56) Entgegenhaltungen:
**DE-A-1 659 222**
**DE-A-2 806 574**
**DE-A-3 032 021**
**FR-A-1 592 524**
**FR-A-2 393 917**
**FR-A-2 446 460**

(73) Patentinhaber: **Schmalhofer, Markus, Robert-Bosch- Strasse 15, D-8350 Plattling (DE)**

(72) Erfinder: **Schmalhofer, Markus, Robert- Bosch-Strasse 15, D-8350 Plattling (DE)**

(74) Vertreter: **Kuhnen, Wacker & Partner, Schneggstrasse 3-5 Postfach 1729, D-8050 Freising (DE)**

## Beschreibung

Die Erfindung betrifft eine umlaufende Einfassung für Türen oder Fenster nach dem Oberbegriff des Anspruches 1, sowie ein Kastenbauteil, insbesondere einen Rolladenkasten nach dem Oberbegriff des Anspruches 13.

Eine gattungsgemäße umlaufende Einfassung für Türen oder Fenster ist beispielsweise aus der DE-A-3 032 021 bekannt. Diese Einfassung in Form eines Futterteiles für ein Be- und Entlüftungsfenster weist zwei im Abstand zueinander angeordnete, als Hohlprofil ausgebildete Seitenschenkel auf, die mittels zweier ebenfalls im Abstand zueinander angeordneter oberer und unterer Querschenkel miteinander verbunden sind, wobei die Querschenkel ebenfalls als Hohlprofile ausgebildet sind. Im oberen Querschenkel und den beiden Seitenschenkeln sind Trennwände mit guten Leiteigenschaften angeordnet, so daß die genannten Schenkel in zwei Kanäle unterteilt werden und die Trennwände rekuperativ arbeitende Wärmetauscher bilden. Diese sind an zwei jeweils sowohl mit dem Innenraum als auch mit der Umgebung verbindbare Strömungskanäle angeschlossen, durch die hindurch mittels zweier Gebläse zum einen Frischluft und zum anderen Raumluft an den als Wärmetauscher fungierenden Trennwänden vorbei gefördert wird. Im Zuge dieser Förderung, die im Gleichstrom erfolgt, wird die angesaugte Frischluft durch Wärmetausch erwärmt und in den zu belüftenden Raum eingeblasen, während die Raumluft nach der Wärmeabgabe an die Frischluft in die Umgebung gefördert wird. Weiterhin soll durch das Vorsehen eines Motors für zwei Gebläse für Frischluft bzw. Raumluft erreicht werden, daß die dem Raum zugeführte Frischluftmenge der aus dem Raum abgeführten Raumluftmenge entspricht, um ein Luftansaugen aus anderen Räumen zu verhindern. Zur Verlagerung des Strömungsweges weisen die als Wärmetauscher fungierenden Trennwände zusätzliche Umlenkplatten auf. >erbei ist jedoch nachteilig, daß die Frischluft bei ihrer Erwärmung in den Wärmetauschern stark getrocknet wird undin diesem stark getrockneten Zustand in den zu belüftenden Raum gefördert wird. Dies ergibt jedoch eine erhebliche Verminderung des Klimatisierungseffektes des zu belüftenden Raumes, die zwar ein Zuführen erwärmter, jedoch sehr trockener Frischluft ermöglicht, was beispielsweise dem Effekt in Räumen mit Zentralheizung vergleichbar ist.

Es ist daher Aufgabe der Erfindung, eine umlaufende Einfassung für Türen oder Fenster, der im Oberbegriff des Anspruches 1 umrissenen Gattung zu schaffen, die neben einer Zuführung durch Raumluft erwärmter Frischluft auch eine weitere Erhöhung des Klimatisierungseffektes ermöglicht.

Diese Aufgabe wird durch die kennzeichnenden Merkmale des Anspruches 1 gelöst.

Dadurch wird erreicht, daß Kondenswasser, das gemäß im Rahmen der Erfindung angestellter Untersuchungen bei der Abkühlung der Raumluft anfällt, der im Zuge der Erwärmung stark abgetrockneten Luft zugeleitet werden kann, so daß diese vor ihrer Zuleitung in den zu belüftenden Raum erwärmt und zudem in geeigneter Weise befeuchtet werden kann. Damit wird vor allem der Vorteil erreicht, daß ein Zuleiten sehr trockener Warmluft, die wie bei zentral geheizten Räumen für die im Raum befindlichen Personen sehr unangenehm ist, unter Ausnutzung des anfallenden Kondenswassers auf das gewünschte Niveau befeuchtet werden kann, ohne daß hierfür zusätzliche Befeuchtungseinrichtungen erforderlich wären.

Darüber hinaus weist die erfindungsgemäße Einfassung natürlich sämtliche Vorteile auf, die auch der gattungsgemäßen Einfassung eigen sind. Hierzu gehört insbesondere der hohe Wirkungsgrad und die große Energieeinsparung aufgrund der Ausnützung des Wärmeinhalts der Raumluft. Weitere Vorteile sind die Möglichkeit der kostengünstigen individuellen Klimatisierung einzelner Räume bei Abkoppelung von zentralen Klimatisierungseinrichtungen.

Aus der DE-A-1 659 222 ist zwar auf die Möglichkeit eines Einbaues von Befeuchtungsvorrichtungen für den Luftstrom hingewiesen, jedoch ergibt sich aus der genannten Druckschrift in keiner Weise, wie ein derartiger Einbau bewerkstelligt werden könnte. Vielmehr lassen die in der DE-A-1 659 222 dargestellten Ausführungsformen ein Vorsehen einer Befeuchtungsmöglichkeit, die derjenigen der erfindungsgemäßen Einfassung entspricht, nicht machbar erscheinen, da hier die Gefahr bestehen würde, daß der Lüfter mit Kondenswasser in Berührung kommen würde.

Die aus der FR-A-2 446 460 bekannte Vorrichtung zum Austausch von Wasser und kondensierfähigen Teilchen ist speziell für Kondensationswärmetauscher gedacht, so daß allein aufgrund des erheblichen Bauaufwandes diese bekannte Vorrichtung für den sehr speziellen Anwendungszweck bei Einfassungen für Türen oder Fenster nicht geeignet ist.

Die Unteransprüche haben vorteilhafte Weiterbildungen der Erfindung sowie ein Kastenbauteil zur Verwendung oberhalb der erfindungsgemäßen Einfassung zum Inhalt.

Bei der vorteilhaften Weiterbildung der Erfindung gemäß Anspruch 3 ist es möglich, eine aus erwärmter Frischluft bestehende Schicht vor der Fensterscheibe zu bilden, die als zusätzliche Dämmschicht gegen eine Wärmeabstrahlung über die Fensterscheibe wirkt.

Bei der vorteilhaften Weiterbildung der Erfindung gemäß Anspruch 4 wird das aus der Raumluft ausfallende Kondenswasser in einem in dem unteren Querschenkel angeordneten Sammelraum gesammelt und kann von diesem erforderlichenfalls abgeleitet werden.

Wird die Erfindung gemäß Anspruch 6 weitergebildet, kann das in dem Sammelraum des unteren Querträgers gesammelte Kondenswasser zur Befeuchtung der erwärmten Frischluft verwendet werden. Hierzu wird die Frischluft, die nach der im Wärmetauscher vorgenommene Erwärmung sehr trocken ist und damit sehr viel Wasser aufnehmen kann, an der ggf. durch entsprechende Einrichtungen stark vergrößerten Oberfläche des Kondenswassers vorbeigeleitet, wobei sie mit Wasser angereichert wird. Danach wird die befeuchtete Frischluft über die Austrittsöffnungen in den Raum geleitet. Dies bringt den Vorteil mit sich, daß zum einen eine Ableitung des Kondenswassers aus der erfindungsgemäßen Einfassung nicht erforderlich ist und zum anderen auf zusätzliche Einrichtungen zur Befeuchtung der Frischluft nach deren Erwärmung verzichtet werden kann.

Gemäß dieser vorteilhaften Weiterbildung kann weiterhin im Sammelraum des unteren Querschenkels in Strömungsrichtung nach dem Wärmetauscher eine Heizvorrichtung vorgesehen sein, die dann in Wirkung tritt, wenn die Frischluft extrem kalt ist und eine Nachwärmung auf eine bestimmte Temperatur erwünscht ist. Als geeignete Heizeinrichtungen bieten sich vor allem elektrische Heizeinrichtungen beispielsweise in Form von geraden Heizdrähten oder Heizwendeln an.

Der Wärmetauscher kann gemäß der vorteilhaften Weiterbildung nach Anspruch 7 durch Führung der Strömungskanäle für Frisch- und Raumluft in gegenseitiger Nachbarschaft gebildet sein, wobei die Strömungskanäle in den Seitenschenkeln angeordnet sind. Mit besonderem Vorteil kann der Wärmetauscher gemäß Anspruch 8 aus einer Mehrzahl von Teilkanälen ausgebildet sein, in die die Stromungskanäle unterteilt sind, und durch die jeweils abwechselnd nebeneinander Raumluft und Frischluft geleitet wird. Dies ergibt einen besonders hohen Wirkungsgrad durch eine sehr hohe Wärmeaustauschfläche.

Bei der vorteilhaften Weiterbildung gemäß Anspruch 12 kann das oder die Gebläse im oberen, nach Art eines Hohlprofiles ausgebildeten Querschenkel angeordnet werden, wobei im Falle mehrerer Gebläse diese wenigstens annähernd nebeneinander und bezüglich der Höhe des Querschenkels zueinander versetzt angeordnet sind und durch eine entsprechend gebogene liegende Trennwand voneinander getrennt sind, um dementsprechend die Förderung von Frisch- und Raumluft in die zugeordneten Teilkanäle des Wärmetauschers zu ermöglichen. Werden die Gebläse etwa in der Mitte des oberen Querschenkels so nahe wie möglich beieinander angeordnet, ergibt sich der Vorteil, daß der verbleibende Hohlraum zu beiden Seiten der Gebläse ebenfalls mit Wärmetauschern in einer der zuvor beschriebenen Ausbildungen versehen werden kann, wodurch sich die Wärmeaustauschfläche noch weiter erhöhen läßt.

Gemäß Anspruch 13 ist ein Kastenbauteil insbesondere in Form eines Rolladenkastens definiert, der oberhalb der Einfassung gemäß einem der Ansprüche 1 bis 12 angeordnet werden kann. Dieses Kastenbauteil weist einen Raum zur Aufnahme wenigstens eines Gebläses auf, der im Einbauzustand sowohl über Strömungskanäle zur Förderung von Frisch- und Raumluft mit der Umgebung verbunden als auch an die Strömungskanäle der Einfassung angeschlossen ist. Das Vorsehen eines derartigen Kastenbauteiles ist insbesondere dann von Vorteil, wenn ohnehin beispielsweise bei einem Neueinbau einer Tür oder eines Fensters ein Rolladenkasten vorgesehen werden soll oder bei einem bereits eingebauten Fenster oder einer Tür ein Rolladenkasten vorhanden ist. In diesem Falle kann bei Vorsehen eines entsprechend kleinen Rolladens der verbleibende Raum zur Aufnahme wenigstens eines der Gebläse genutzt werden, was den Vorteil mit sich bringt, daß der obere Querträger dementsprechend kleiner ausgebildet werden kann. Dies wiederum bringt den Vorteil einer wesentlich größeren konstruktiven Freizügigkeit mit sich, so daß Anpassungsmöglichkeiten an die unterschiedlichsten Einbaufälle mit äußerst geringem Aufwand durch Verlegen eines Teiles der Aggregate in den Rolladenkasten möglich ist. Die Maßnahmen zur Anpassung des Rolladens an seinen erweiterten Funktionsbereich beschränken sich auf das Anordnen entsprechender Strömungskanäle zur Förderung von Frisch- und Raumluft und auf das Vorsehen geeigneter Anschlüsse an die Einfassung.

Werden die Strömungkanäle für Raumluft derart am Kastenbauteil angeordnet, daß sie in dessen Einbauzustand in unmittelbarer Nachbarschaft der Außenseite der Fensterscheibe bzw. des Türblattes münden und dabei die nach außen geförderte Raumluft nach unten austritt, ist es mit besonderem Vorteil möglich, die abgeleitete Raumluft auf der Außenseite der Fensterscheibe bzw. des Türblattes zur Bildung einer weiteren Wärmedämmschicht auszunutzen. Das ist insbesondere dann mit sehr großer Wirkung möglich, wenn der Rolladen herabgelassen ist und die Raumluft in den Spalt zwischen der Fensterscheibe und dem Rolladen eingeleitet wird.

Weitere Einzelheiten, Merkmale und Vorteile der Erfindung ergeben sich aus nachfolgender Beschreibung von Ausführungsbeispielen anhand der Zeichnung.

Es zeigt

Fig. 1 eine schematisch vereinfachte Darstellung einer ersten Ausführungsform der erfindungsgemäßen Einfassung zur Erläuterung des erfindungsgemäßen Prinzips am Beispiel eines festeingebauten rahmenlosen Fensters,

Fig. 2 eine perspektivische Darstellung nur der linken Hälfte einer zweiten Ausfürungsform der Einfassung, und

Fig. 3 eine perspektivische bzgl. Einzelheiten stark vereinfachte Darstellung einer Ausführungsform eines erfindungsgemäßen Kastenbauteils, das im Beispielsfalle als Rolladenkasten ausgebildet ist.

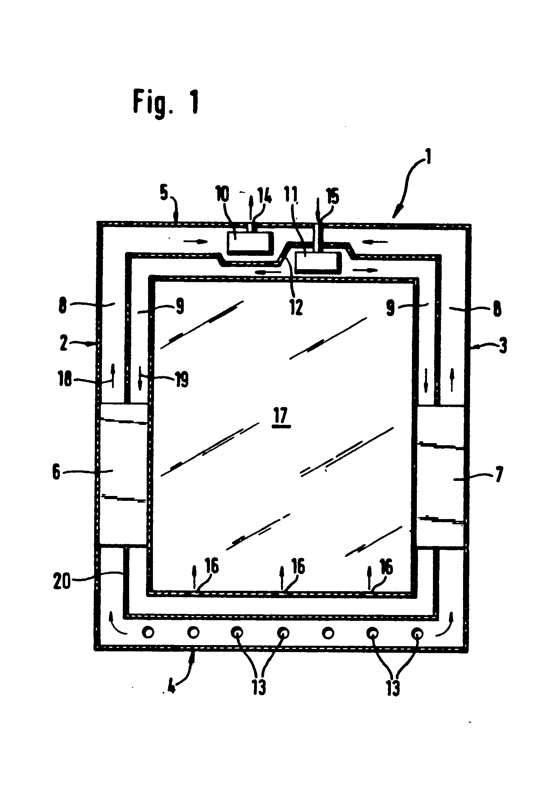

Bei der gemäß Fig. 1 dargestellten Ausführungsform einer erfindungsgemäßen Einfassung 1 handelt es sich um eine Einfassung für ein festeingebautes rahmenloses Fenster, das nicht zu öffnen ist. Die Einfassung 1 weist zwei Seitenschenkel 2 und 3 und zwei Querschenkel 4 und 5 auf, die im Beispielsfalle im rechten Winkel zu den Seitenschenkel 2 und 3 angeordnet sind und diese miteinander verbinden.

Im Beispielsfalle sind die Seitenschenkel 2 und 3 und ebenfalls die Querschenkel 4 und 5 nach Art von Hohlprofilen ausgebildet, in deren Hohlräume die Aggregate angeordnet werden können, die für die Frischluftzufuhr und deren Erwärmung durch die Raumluft erforderlich sind. So weisen die Seitenschenkel 2 und 3 jeweils einen Wärmetauscher 6 bzw. 7 auf, der rekuperativ arbeitet. Die Wärmetauscher 6 und 7 sind im Beispielsfalle jeweils an zwei Strömungskanäle 8 und 9 angeschlossen, die im Einbauzustand sowohl mit dem nicht näher dargestellten Innenraum als auch mit der Umgebung verbunden sind.

Im Hohraum des oberen Querschenkels 5 sind nebeneinander und bezüglich des Höhe des Querschenkels 5 versetzt zueinander zwei Gebläse 10 und 11 angeordnet. Die Gebläse 10 und 11 werden durch eine liegende Trennwand 12 voneinander getrennt, die entsprechend der Größe und der Anordnung der Gebläse 10 und 11 im Beispielsfalle eine S-förmige Kontur aufweist.

Bei der dargestellten Auführungsform der erfindungsgemäßen Einfassung 1 wird im Strömungskanal 8 Raumluft gefördert, während im Strömungskanal 9 Frischluft gefördert wird. Zur Förderung von Raumluft saugt das Gebläse 10 über Eintrittsöffnungen 13, die entlang des unteren Querschenkels 4 angeordnet sind, Raumluft an, fördert diese durch den gemäß der gewählten Darstellung unteren Bereich des Strömungskanales 8 durch den rekuperativ arbeitenden Wärmetauscher 6 bzw. 7 in den oberen Abschnitt des Strömungskanales 8, von wo aus die Raumluft über das Gebläse 10 und Austrittsöffnungen 14 in die Umgebung geleitet wird.

Zur Förderung von Frischluft saugt das Gebläse 11 über Eintrittsöffnungen 15 Frischluft aus der Umgebung an und fördert diese über die oberen Bereiche des Strömungskanales 9 zu den Wärmetauschern 6 bzw. 7 in die unteren Bereiche der Strömungskanäle 9, von wo aus die erwärmte Frischluft über Austrittsöffnungen 16 ausgeblasen wird. Die Austrittsöffnungen 16 sind im Beispielsfalle am unteren Querschenkel 4 derart angeordnet, daß die Frischluft im wesentlichen in paralleler Richtung zur Fensterscheibe 17 und nach oben gerichtet ausströmt. Auf diese Weise ist es möglich, eine aus erwämter Frischluft bestehende Wärmedämmschicht vor der Fensterscheibe 17 zu bilden, was die Wärmeabstrahlung durch die Fensterscheibe und damit einhergehende Energieverluste erheblich vermindert.

Wie aus der Richtung der mit 18 und 19 bezeichneten Pfeile, die die Strömungsrichtung der Raumluft bzw. der Firschluft anzeigen, zu ersehen ist, werden bei der dargestellten Ausführungsform der erfindungsgemäßen Einfassung 1 die Wärmetauscher 6 und 7 im Gegenstromverfahren betrieben. Ebenso ist aus der Prinzipdarstellung gemäß Fig, 1 ersichtlich, daß durch die Führung der Strömungskanäle 8 und 9 für Frischluft und Raumluft in gegenseitiger Nachbarschaft entlang der Trennungswand 18 zwischen den Strömungskanälen 8 und 9 eine zusätzliche Wämetauschfläche geschaffen wird. Ebenso entsteht eine zusätzliche Wärmetauschfläche im Bereich des oberen Querschenkels 5, da die Gebläse 10 und 11 so nahe beieinander angeordnet sind, daß zu beiden Seiten der Gebläse 10 und 11 genügend Raum für einen zusätzlichen, von den Strömungskanälen 8 und 9 gebildeten Wärmetauscher ist.

Zu den besonderen Vorteilen einer solchen Anordnung gehört vor allem, daß zur Klimatisierung von Räumen ein Öffnen des Fensters unterbleiben kann, da der gesamte Luftaustausch über die Einfassung des Fensters bzw. der Tür mittels der Gebläse 10 und 11, der Strömungskanäle 8 und 9 und der Wärmetauscher 6 und 7 erfolgen kann. Darüber hinaus sind im Beispielsfalle sämtliche erforderlichen Aggregate in den nach Art von Hohlprofilen ausgebildeten Seitenschenkeln 2 und 3 und Querschenkel 4 und 5 untergebracht, was eine äußerst platzsparende Anordnung darstellt, da keinerlei zusätzliche gehäuseartige Einrichtungen zur Aufnahme der Aggregate erforderlich sind.

Durch die Ausnutzung der Wärmeenergie der Raumluft, die in die Umgebung abgeleitet wird, zur Erwärmung der aus der Umgebung angesaugten Frischluft ist ein ständiger Wärmerückgewinn möglich, der eine sehr große Energieersparnis mit sich bringt.

Im übrigen bildet die erfindungsgemäße Einfassung 1 eine Klimatisierungseinheit, die unabhängig von einer zentralen Klimaanlage zur Klimatisierung von einzelnen Räumen verwendet werden kann, was die zuvor bereits erwähnten Vorteile mit sich bringt. In Strömungsrichtung hinter den Wärmetauschern 6 und 7 kann erforderlichenfalls eine bei dieser Ausführungsform nicht näher dargestellte Nachheizeinrichtung angeordnet sein, die dann in Wirkung tritt, falls extrem kalte Frischluft angesaugt wird, die in den Wärmetauschern 6 und 7 mittels der von der Raumluft übertragenen Wärmeenergie nicht auf die gewünschte Temperatur erwärmt werden kann. Als Nachheizeinrichtungen bieten sich zweckmäßigerweise elektrische Heizeinrichtungen beispielsweise in Form von Heizdrähten oder Heizspiralen an, die selektiv beispielsweise mittels einer entsprechend ausgebildeten Steuer- bzw. Regelvorrichtung in Abhängigkeit von der Temperatur der Frischluft nach dem Durchlauf durch die Wärmetauscher 6 und 7 zuschaltbar sind.

Für das bei der Abkühlung der Raumluft aus dieser ausfallende Kondenswasser ist im unteren Querschenkel 4 eine entsprechende, bei dieser Ausführungsform nicht dargestellte Auffangvorrichtung vorgesehen sein. Das gesammelte Kondenswasser wird dem Strömungskanal 9 für Frischluft zugeleitet, so daß die extrem trockene erwärmte Frischluft mittels des Kondenswassers befeuchtet werden kann und erst danach in den zu belüftenden Raum geleitet wird. Dies bringt den besonderen Vorteil mit sich, daß zum einen das Kondenswasser nicht abgeleitet werden muß und daß zudem die gerade bei beheizten Räumen notwendige Luftbefeuchtung mittels ohnehin anfallendem Wasser durchgeführt werden kann, was eine zusätzliche Befeuchtungsanlage überflüssig macht.

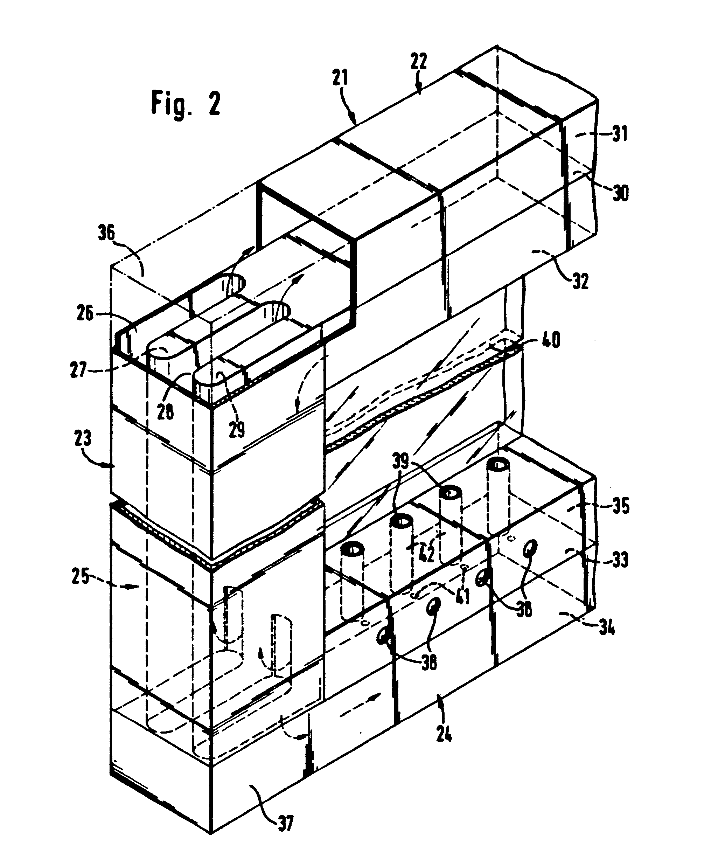

Fig. 2 zeigt die linke Hälfte einer zweiten Ausführungsform einer erfindungsgemäßen Einfassung 21. Die Einfassung 21 weist einen oberen Querschenkel 22 auf, der mit einem Seitenschenkel 23 verbunden ist. An seinem unteren Ende ist der Seitenschenkel 23 mit einem weiteren Querschenkel 24 verbunden. Sowohl die Querschenkel 22 und 24 als auch der Seitenschenkel 23 sind nach Art von Hohlprofilen ausgebildet.

Im Seitenschenkel 23 ist ein Wärmetauscher 25 angeordnet, der im Beispielsfalle eine Mehrzahl von Teilkanälen 26, 27, 28 und 29 aufweist. Bei der dargestellten Ausführungsform ist der Wärmetauscher 25 als ein mäanderförmig gebogenes Wandbauteil aus einem blech- bzw. folienartigen Material ausgebildet, wobei je ein Bogen der Mäanderform einen Teilkanal 26, 27, 28 bzw. 29 bildet. Der obere Querschenkel 22 ist mittels einer horizontal angeordneten Trennwand 30 in zwei Strömungskanäle 31 und 32 getrennt.

Der untere Querschenkel 24 ist ebenfalls mittels einer Trennwand 33 in eine untere und obere Kammer 34 bzw. 35 unterteilt.

Die Strömungskanäle 31 und 32 stehen mit nicht näher dargestellten Gebläsen in Verbindung, die Raumluft und Frischluft durch die Strömungskanäle 31 und 32, den Wärmetauscher 25 und die Kammern 34 und 35 fördert.

Die Teilkanäle 26 und 28 des Wärmetauschers 25 sind gemäß der gewählten Darstellung an ihrem oberen Ende stirnseitig offen, während sie an ihrem unteren Ende seitlich offen sind. Im Gegensatz hierzu sind die Teilkanäle 27 und 29 des Wärmetauschers 25 an ihrem oberen Ende seitlich offen während sie an ihrem unteren Ende stirnseitig offen sind. Dies bedeutet, daß die Teilkanäle 26 und 28 oben in einen kammerartigen Teil 36 des Seitenschenkels 23 münden, der mit dem Strömungskanal 31 des Querschenkels 22 strömungsverbunden ist. In ihrem unteren Teil münden die Strömungskanäle 26 und 28 über ihre seitlichen Öffnungen in die Kammer 35 des unteren Querschenkels 25. Die oben geschlossenen Teilkanäle 27 und 29 hingegen münden in ihrem oberen Teil über ihre seitlichen Öffnungen in den Strömungskanal 32 des oberen Querschenkels 22, während sie in ihrem unteren Teil über ihre stirnseitigen Offnungen in einen kammerartigen Bereich 37 des Seitenschenkels 23 münden, der mit der unteren Kammer 34 des unteren Querschenkels 24 in Strömungsverbindung steht.

Im Beispielsfalle wird Raumluft von dem nicht näher dargestellten Gebläse für Raumluft über Ansaugöffnungen 38, die im oberen Bereich des unteren Querschenkels 24, also oberhalb der Trennwand 33, angeordnet sind, an und fördert diese über die Teilkanäle 26 und 28 in den oberen kammerartigen Bereich 36 des Seitenschenkels 23, von wo aus die Raumluft über den Strömungskanal 31, das nicht näher dargestellte Gebläse und ebenfalls nicht näher dargestellte Austrittsöffnungen in die Umgebung abgepumpt werden. Dementsprechend saugt ein nicht näher dargestelltes Gebläse für Frischluft Frischluft aus der Umgebung an und leitet diese über den Strömungskanal 32 in die Teilkanäle 27 und 29, von wo aus die Frischluft über die stirnseitigen Öffnungen der Teilkanäle 27 und 29 in den kammerartigen Bereich 37 des Seitenschenkels 23 und von dort aus in die untere Kammer 34 des unteren Querschenkels 24 geleitet wird. Von dort aus wird die Frischluft über Austrittsöffnungen 39, die in unmittelbarer Nachbarschaft einer Fensterscheibe 40 angeordnet sind, aus dem unteren Querschenkel 24 herausgefördert. Vorteilhafterweise sind die Austrittsöffnungen 39 derart angeordnet, daß die austretende Frischluft wenigstens annähernd parallel zur Fensterscheibe 40 und nach oben gerichtet austreten kann, wodurch eine zusätzliche Wärmedämmschicht aus erwärmter Frischluft gebildet wird.

Im Wärmetauscher 24 wird im Gegenstromverfahren die in der angesaugten Raumluft enthaltene Wärmeenergie auf die angesaugte Frischluft übertragen, die sich dementsprechend erwärmt. Aufgrund der Unterteilung des Wärmetauschers 25 dieser Auführungsform in mehrere Teilkanäle 26, 27, 28 und 29 ergibt sich eine sehr große Wärmeübergangsfläche, die den Wirkungsgrad des Wärmetauschers 25 beträchtlich erhöht. Selbstverständlich ist auch bei dieser Ausführungsform die Anordnung eines weiteren Wärmetauschers im zweiten nicht näher dargestellten Seitenschenkel möglich. Ebenso ist auch bei dieser Ausführungsform bei entsprechender Anordnung der Gebläse nahe beieinander und in der Mitte des oberen Querschenkels 22 eine Anordnung weiterer Wärmetauscher in den seitlich der Gebläse verbleibenden Räumen des oberen Querschenkels 22 möglich, um die Ausnutzung der in der Raumluft enthaltenen Wärmeenergie noch zu verbessern.

Ebenso ist es bei dieser Ausführungsform, wie auch bei der ersten Ausführungsform, möglich, eine zusätzliche Heizeinrichtung in Strömungsrichtung hinter dem Wärmetauscher 25 anzuordnen, um eine eventuell notwendige Nachwärmung von Frischluft vor dem Austritt aus den Austrittsöffnungen 39 durchführen zu können.

Das bei der Abkühlung der Raumluft anfallende Kondenswasser wird bei der dargestellten Ausführungsform über die Teilkanäle 26 und 28 und deren im unteren Bereich angeordneten seitlichen Öffnungen in die Kammer 35 des unteren Querschenkels 24 geleitet. In der Trennwand 33 zwischen den Kammern 35 und 34 sind Durchtrittsöffnungen 41 angeordnet, durch die hindurch das in der Kammer 35 gesammelte Kondenswasser in die untere Kammer 34 gelangen kann. Dort kommt das Kondenswasser mit der aus den Teilkanälen 27 und 29 zugeleiteten erwärmten Frischluft in Berührung, die aufgrund ihrer niedrigen relativen Feuchtigkeit nach der Erwärmung im Wärmetauscher 24 eine große Flüssigkeitsmenge aufnehmen kann und daher vor dem Austritt aus den Austrittsöffnungen 39 in den zu belüftenden Raum auf diese Weise befeuchtet wird, ohne daß zusätzliche Befeuchtungseinrichtungen notwendig sind. Dies bringt überdies den Vorteil mit sich, daß das ohnehin anfallende Kondenswasser nicht extra abgeleitet werden muß, sondern über die Befeuchtung der zugeführten, erwärmten Frischluft wieder dem Raum zugeführt werden kann. Damit die Frischluft von der unteren Kammer 34 zu den Austrittsöffnungen 39 gelangen kann, sind auf der Trennwand 33 für jede der Austrittsöffnungen 39 Kanäle 42 vorgesehen, die eine Strömungsverbindung zwischen der Kammer 34 und den Austrittsöffnungen 39 schaffen.

Als eine weitere konstruktive Möglichkeit zur Schaffung einer Befeuchtungseinrichtung innerhalb der erfindungsgemäßen Einfassung 21 wäre es denkbar, die Kammer 34 mit einem horizontalen Kanal zu versehen, in dem sich das Kondenswasser sammeln kann und in dem eine vertikale Wand angeordnet ist, die sich über die gesamte Längserstreckung des Querschenkels 24 erstreckt. Zwischen dem Boden des Kanales und dem unteren Ende der Trennwand ist eine Durchtrittsöffnung für Kondenswasser vorgesehen, das sich hier auf einer Seite des durch die vertikale Tennwand in zwei Kammern getrennten Querschenkels 24 gesammelt hat. Über die Durchtrittsöffnung kann das Kondenswasser von einer Seite des Kanals auf die andere Seite fließen und so mit der in dem anderen Kanal strömenden Frischluft in Berührung kommen. Bei dieser Konstruktion ist es möglich, die Oberfläche des Wassers beispielsweise durch das Vorsehen einer beispielsweise filzartigen Schicht auf der vertikalen Wand bzw. auf allen Wänden der zweiten Kammer, in die das Kondenswasser eindringen kann, erheblich zu erhöhen.

Als Materialien für die Querschenkel 22 und 24 und den Seitenschenkel 23 eignen sich insbesondere Kunststoff oder Aluminium. Als Material für den Wärmetauscher 25 eignet sich insbesondere ein blech- oder folienartiges gut wärmeleitendes Material beispielsweise aus Aluminium, das bei einer bevorzugten Ausführungsform des Wärmetauschers 25 eine Dicke von 0,3 mm aufweisen kann.

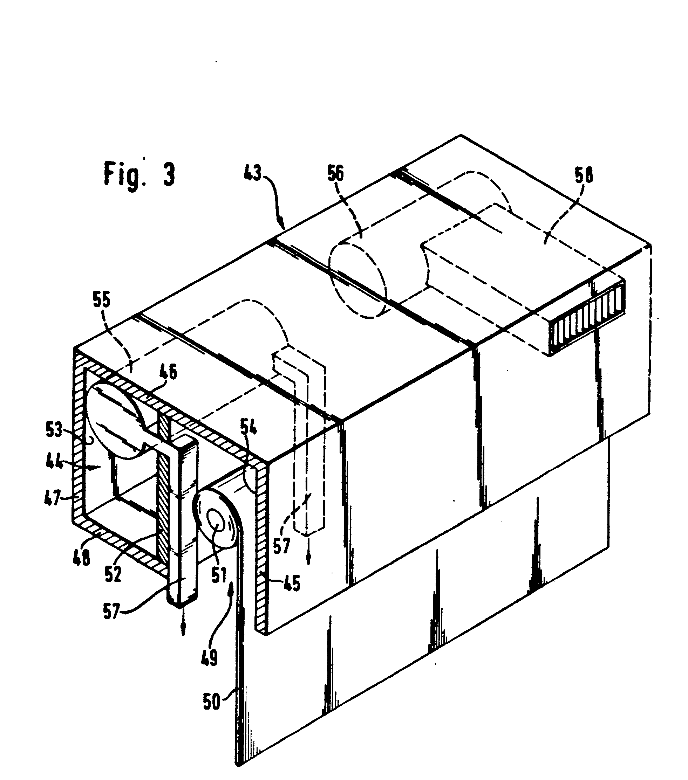

Gemäß Fig. 3 ist ein Kastenbauteil 43 dargestellt, das bei der dargestellten Ausführungsform als Rolladenkasten ausgebildet ist. Dieses Kastenbauteil 43 kann zum Einbau oberhalb der erfindungsgemäßen Einfassung verwendet werden. Der Rolladenkasten 43 weist einen im wesentlichen rechteckigen Querschnitt auf und der den Innenraum bildende Hohlraum 44 des Rolladenkastens 43 ist durch vier Wände 45, 46, 47 und 48 begrenzt. In der gemäß der gewählten Darstellung unteren Wand 48 ist eine Ausnehmung 49 angeordnet, die sich über die gesamte Länge des Rolladenkastens erstreckt. Durch diese Ausnehmung 49 hindurch wird der Rolladen 50 beim Herablassen hindurchgeführt. Die Rolladenwalze 51 ist oberhalb der Ausnehmung 49 im Rolladenkasten 43 aufgehängt.

Der Innenraum 44 des Rolladenkastens 43 ist mittels einer Trennwand 52, die sich über die gesamte Länge des Rolladenkastens 43 erstreckt und im rechten Winkel zur Wand 46 angeordnet ist, in zwei Aufnahmeräume 53 und 54 getrennt. Der Aufnahmeraum 54 dient im wesentlichen zur Lagerung der Rolladenwalze 51 wohingegen der Aufnahmeraum 53 bei der dargestellten Ausführungsform des erfindungsgemäßen Rolladenkastens zur Aufnahme von zwei Gebläsen 55 und 56 dient. Die Gebläse 55 und 56 entsprechen in ihrer Funktion denjenigen der zuvor beschriebenen Ausführungsformen. So ist bei der dargestellten Ausführungsform das Gebläse 55 dasjenige, das die Raumluft durch die erfindungsgemäße Einfassung fördert, während das Gebläse 56 bei der dargestellten Ausführungsform das Gebläse zur Frischluftförderung ist.

Der Aufnahmeraum 54 ist über Strömungskanäle im Einbauzustand sowohl mit der Umgebung als auch mit den Strömungskanälen der Einfassung verbunden. So bildet bei der dargestellten Ausführungsform ein Strömungskanal 57, der mit dem Gebläse 55 strömungsverbunden ist, den Raumluftaustritt aus dem Rolladenkasten bzw. aus der erfindungsgemäßen Einfassung, die in Fig. 3 aus Übersichtlichkeitsgründen nicht näher dargestellt ist, und über einen nicht näher dargestellten weiteren Strömungskanal mit dem Gebläse 55 ebenfalls strömungsverbunden ist.

Das Gebläse 56, das zur Frischluftförderung dient, ist über einen Strömungskanal 58 mit der Umgebung verbunden und saugt über diesen Strömungskanal 58 Frischluft an, die über nicht näher dargestellte weitere Strömungskanäle in die Einfassung gefördert wird.

Die Trennwand 52 zwischen den Aufnahmeräumen 53 und 54 ist mit besonderem Vorteil aus einem wärmedämmenden Material hergestellt, so daß Energieverluste im Bereich des Rolladenkastens vermieden werden können.

Ein derartiger Rolladenkasten 43 kann entweder als vorgefertigtes Bauteil vorliegen, das bereits vor dem Einbau mit allen nötigen Zusatzeinrichtungen wie den Strömungskanälen oder auch den Gebläsen versehen ist. Sollte jedoch bereits ein Rolladenkasten beim Einbau einer erfindungsgemäßen Einfassung vorhanden sein, kann dieser durch einfache Umrüstarbeiten an seine Funktion angepaßt werden. Ist der Innenraum 44 durch eine sehr große Rolladenwalze so weit ausgefüllt, daß kein genügender Raum zur Unterbringung der Gebläse 55 und 56 vorhanden ist, kann der vorhandene Rolladen durch einen sogenannten Mini-Rolladen ersetzt werden, der wesentlich geringere Abmessungen aufweist, so daß genügend Raum für die Unterbringung der Gebläse 55 und 56 geschaffen wird. Nach dieser Anpassungsmaßnahme müssen lediglich noch die notwendigen Strömungskanäle verlegt werden und die Gebläse in den durch Einbau des Mini-Rolladens geschaffenen Aufnahmeraum 53 eingesetzt werden.

Selbstverständlich ist es auch möglich, daß lediglich ein Gebläse in den Aufnahmeraum 53 eingesetzt wird, und das andere Gebläse in der Einfassung, die zusammen mit dem Rolladenkasten zum Einbau gelangt, untergebracht wird. Dies ergibt eine große Freizügigkeit bei der konstruktiven Auslegung sowohl der erfindungsgemäßen Einfassung als auch des erfindungsgemäßen Rolladenkastens, was eine Vielzahl von Anpassungsmöglichkeiten an alle möglichen Einbaufälle schafft.

Bei einer besonders vorteilhaften Ausführungsform werden die Strömungkanäle 57 zum Ableiten von Raumluft derartig im Rolladenkasten angeordnet, daß die Strömungskanäle 57 im Einbauzustand des Rolladenkastens 43 in unmittelbarer Nachbarschaft der Fensterscheibe bzw. des Türblattes für einen nach unten gerichteten Austritt münden. Damit ist es möglich, eine Wärmedämmschicht bestehend aus Raumluft vor der Fensterscheibe zu schaffen. Besonders bei herabgelassenem Rollanden kann diese Wärmedämmschicht sehr gut in dem zwischen dem Rolladen und der Fensterscheibe entstehenden Raum aufgebaut werden, wobei im unteren Bereich des Fensters eine Durchtrittsöffnung beispielsweise durch Anschläge, auf denen der herabgelassene Rolladen aufliegt, geschaffen werden kann, um den Strömungswiderstand, der der aus dem Strömungskanal 57 ausgeblasenen Raumluft entgegenwirkt, durch einen Druckausgleich mit der Umgebung klein zu halten.

Um die Gefahr einer Vermischung von angesaugter Frichluft und ausgeblasener Raumluft zu vermeiden, sind die Strömungskanäle 57 und 58 bevorzugt in seitlichem Abstand zueinander an dem Rolladenkasten 43 angeordnet.

Die anhand der Ausführungsbeispiele im Vorangehenden erläuterte erfindungsgemäße Einfassung kann bei jeglicher Art von Fenstertyp verwendet werden. So ist die gemäß Fig. 1 beschriebene Einfassung 1 nicht auf die Verwendung bei einem festeingebauten rahmenlosen Fenster beschränkt sondern kann ebenso bei jeglichem anderen Typ von Fenster verwendet werden. Das gleiche gilt für die gemäß Fig. 2 beschriebene Ausführungsform. Bei der Verwendung von gerahmten Fenstern kann die erfindungsgemäße Einfassung auch als Rahmen ausgebildet sein. Die Unterbringung eines Teiles der Aggregate in Kastenbauteilen wie beispielsweise Rolladenkästen ist vor allem dann besonders vorteilhaft, wenn ohnehin Rolladenkästen vorgesehen werden sollen bzw. bereits vorgesehen sind. Dies ergibt dann eine größere Freizügigkeit bei der Ausbildung der Einfassung für Türen oder Fenster.

Geruchs- und Schadstoffe können durch Synthetikfilter beseitigt werden, die im Ansaugbereich für Frischluft angeordnet sein können. Beispielsweise können derartige Filter bei der Ausführungsform gemäß Fig. 1 vor der Eintrittsöffnung 15 für Frischluft vorgesehen sein. In der Regel bestehen derartige Synthetikfilter aus Kunststoffasergeweben, -gestricken oder -gelegen.

Statt dieser Ausführungen kann der Synthetikfilter auch in Form von Wolle vorgesehen sein, wobei eine Stabilisierung durch Versteppen möglich ist. Bei Bedarf können die Synthetikfaserfilter auch mehrlagig verwendet werden. Für besondere Anwendungsfälle der Ausfilterung von Geruchs- und Schadstoffen können geeignete Festbettfilter verwendet werden, insbesondere etwa aus Aktivkohle.

## Patentansprüche

1. Umlaufende Einfassung für Türen oder Fenster mit zwei im Abstand zueinander angeordneten nach Art von Hohlprofilen ausgebildeten Seitenschenkeln (2, 3; 23) und zwei die Seitenschenkel verbindenden, oberen und unteren im Abstand zueinander angeordneten Querschenkeln (4, 5; 22, 24), wobei in den Seitenschenkeln rekuperativ arbeitende Wärmetauscher (6, 7; 25) angeordnet sind, die an mindestens zwei jeweils sowohl mit dem Innenraum als auch mit der Umgebung verbindbare Strömungskanäle (8, 9; 26, 27, 28, 29) angeschlossen sind, durch die hindurch mittels Gebläse (10, 11) zum einen Frischluft und zum anderen Raumluft über die Wärmetauscher förderbar ist, dadurch gekennzeichnet, daß aus der Raumluft ausfallendes Kondenswasser dem Strömungskanal (9; 27, 29) für die Frischluft zuleitbar ist.

2. Einfassung nach Anspruch 1, dadurch gekennzeichnet, daß die Ansaugöffnungen (15) für Frischluft im Bereich des oberen Querschenkels (5; 22) und die Ansaugöffnungen (13) für die Raumluft im Bereich des unteren Querschenkels (4; 24) angeordnet sind.

3. Einfassung nach Anspruch 1 oder 2, dadurch gekennzeichnet, daß die Austrittsöffnungen (16; 39) für die erwärmte Frischluft im Bereich des unteren Querschenkels (4; 24) für einen nach oben gerichteten Frischluftaustritt angeordnet sind.

4. Einfassung nach einem der Ansprüche 1 bis 3, dadurch gekennzeichnet, daß der untere Querschenkel (4; 24) nach Art eines Hohlprofiles ausgebildet ist und zwei voneinander getrennte, übereinander angeordnete Kammern (34, 35) aufweist, von denen die untere (34) einen Sammelraum für die in den Wärmetauschern (6, 7; 25) erwärmte Frischluft bildet und mit den Austrittsöffnungen (16; 39) in Verbindung steht und die obere (35) als Sammelraum für aus der Raumluft abgesondertes Kondenswasser ausgebildet ist.

5. Einfassung nach Anspruch 4 dadurch gekennzeichnet, daß die obere Kammer (35) und die untere Kammer (34) über wenigstens eine Flüssigkeitsübertrittsöffnung (41) miteinander in Verbindung stehen.

6. Einfassung nach einem der Ansprüche 1 bis 5, dadurch gekennzeichnet, daß im Strömungskanal (9) für Frischluft in Strömungsrichtung hinter dem Wärmetauscher (6, 7; 25) eine vorzugsweise elektrische Nachheizeinrichtung angeordnet ist.

7. Einfassung nach einem der Ansprüche 1 bis 6, dadurcn gekennzeichnet, daß der Wärmetauscher (6, 7; 25) durch Führung der Strömungskanäle (8, 9) für Frischluft und Raumluft in gegenseitiger Nachbarschaft in den Seitenschenkeln (2, 3) gebildet ist.

8. Einfassung nach Anspruch 7, dadurch gekennzeichnet, daß die Strömungskanäle (8, 9) in eine Mehrzahl von Teilkanälen (26, 27, 28, 29) unterteilt sind, die für Raumluft und Frischluft jeweils abwechselnd nebeneinander angeordnet sind.

9. Einfassung nach einem der Ansprüche 1 bis 8, dadurch gekennzeichnet, daß der Wärmetauscher (25) als mäanderförmig gebogenes Wandbauteil aus einem blech- bzw. folienartigen Material ausgebildet ist, wobei je ein Bogen der Mäanderform einen Teilkanal (26, 27, 28, 29) bildet.

10. Einfassung nach einem der Ansprüche 1 bis 9, dadurch gekennzeichnet, daß der untere und/oder obere Querschenkel (4, 5; 22, 24) nach Art eines Hohlprofiles ausgebildet ist.

11. Einfassung nach Anspruch 9 und 10, dadurch gekennzeichnet, daß das Wandbauteil bis in einen mittleren Bereich (36, 37) des Hohlraumes des unteren bzw. oberen Querschenkels (24 bzw. 22) gezogen ist und mit einer dortigen, liegend angeordneten Trennwand (30, 33) bündig abschließt.

12. Einfassung nach einem der Ansprüche 1 bis 11, dadurch gekennzeichnet, daß die Gebläse im oberen Querschenkel (5) wenigstens annähernd nebeneinander und bezüglich der Höhe des Querchenkels (5) zueinander versetzt angeordnet und durch eine mit Biegungen versehene, liegende Trennwand (12) getrennt sind.

13. Kastenbauteil insbesonder Rolladenkasten, zur Verwendung oberhalb der Einfassung gemäß einem der Ansprüche 1 bis 13, dadurch gekennzeichnet, dan ein Raum (53) zur Aufnahme wenigstens eines Gebläses (55, 56) vorgesehen ist, und daß der Raum (53) sowohl über Strömungskanäle zur Förderung von Frisch- und Raumluft mit der Umgebung verbindbar als auch an die Strömungskanäle der Einfassung anschließbar ist.

14. Kastenbauteil nach Anspruch 13, dadurch gekennzeichnet, daß der Strömungskanal (57) für Raumluft im Einbauzustand des Kastenbauteils (43) in unmittelbarer Nachbarschaft der Fensterscheibe bzw. des Türblattes für einen nach unten gerichteten Austritt mündet.

15. Kastenbauteil nach Anspruch 13 oder 14, dadurch gekennzeichnet, daß die Strömungskanäle (57, 58) des Kastenbauteils (43) für Frisch- und Raumluft in seitlichem Abstand zueinander angeordnet sind.

16. Kastenbauteil nach einem der Ansprüche 13 bis 15, dadurch gekennzeichnet, daß der Raum (53) zur Aufnahme der Gebläse (55, 56) mittels einer wärmedämmenden Trennwand (52) gegen die Umgebung abgedichtet ist.

## Claims

1. Continuous frame for doors or windows, with two side legs (2, 3; 23) arranged at a distance from one another and designed in the manner of hollow profiles, and with two upper and lower transverse legs (4, 5; 22, 24) connecting the side legs and arranged at a distance from one another, there being arranged in the side legs recuperative heat exchangers (6, 7; 25) connected to at least two flow channels (8, 9; 26, 27, 28, 29) which can each communicate both with the interior and with the environment and through which, on the one hand, fresh air and, on the other hand, room air can be conveyed via the heat exchangers by means of fans (10, 11), characterized in that condensation water precipitated from the room air can be fed to the flow channel (9; 27, 29) for the fresh air.

2. Frame according to Claim 1, characterized in that the intake ports (15) for fresh air are arranged in the region of the upper transverse leg (5; 22), and the intake ports (13) for the room air are arranged in the region of the lower transverse leg (4; 24).

3. Frame according to Claim 1 or 2, characterized in that the outflow ports (16; 39) for the heated fresh air are arranged in the region of the lower transverse leg (4; 24) for a fresh-air outflow directed upwards.

4. Frame according to one of Claims 1 to 3, characterized in that the lower transverse leg (4; 24) is designed in the manner of a hollow profile and has two chambers (34, 35) which are separated from one another and arranged above one another, and of which the lower (34) forms a collecting space for the fresh air heated in the heat exchangers (6, 7; 25) and communicates with the outflow ports (16; 39), and the upper (35) is designed as a collecting space for condensation water precipitated from the room air.

5. Frame according to Claim 4, characterized in that the upper chamber (35) and the lower chamber (34) communicate with one another via at least one liquid overflow orifice (41).

6. Frame according to one of Claims 1 to 5, characterized in that a preferably electrical reheating device is arranged in the flow channel (9) for fresh air, behind the heat exchangers (6, 7; 25) in the direction of flow.

7. Frame according to one of Claims 1 to 6, characterized in that the heat exchangers (6, 7; 25) is formed by guiding the flow channels (8, 9) for fresh air and room air oppositely adjacent to one another in the side legs (2, 3).

8. Frame according to Claim 7, characterized in that the flow channels (8, 9) are divided into a multiplicity of part channels (26, 27, 28, 29) which are respectively arranged alternately next to one another for room air and fresh air.

9. Frame according to one of Claims 1 to 8, characterized in that the heat exchanger (25) is designed as a wall component curved in the form of a meander and consists of a sheet-like or foil-like material, each curve of the meander shape forming a part channel (26, 27, 28, 29).

10. Frame according to one of Claims 1 to 9, characterized in that the lower and/or the upper transverse leg (4, 5; 22, 24) is designed in the manner of a hollow profile.

11. Frame according to Claims 9 and 10, characterized in that the wall component is drawn into a middle region (36, 37) of the cavity of the lower and upper transverse legs (24, 22) and ends flush with the horizontal partition wall (30, 33) located there.

12. Frame according to one of Claims 1 to 11, characterized in that the fans in the upper transverse leg (5) are arranged at least approximately next to one another and offset relative to one another in relation to the height of the transverse leg (5), and are separated by the horizontal partition wall (12) provided with bends.

13. Box component, especially a roller-blind box, for use above the frame according to one of Claims 1 to 13, characterized in that there is a space (53) for receiving at least one fan (55, 56), and in that the space (53) can both communicate with the environment via flow channels for conveying fresh air and room air, and be connected to the flow channels of the frame.

14. Box component according to Claim 13, characterized in that, when the box component (43) is installed, the flow channel (57) opens out in the immediate vicinity of the window pane or door leaf for an outflow directed downwards.

15. Box component according to Claim 13 or 14, characterized in that the flow channels (57, 58) of the box components (43) for fresh air and room air are arranged at a lateral distance from one another.

16. Box component according to one of Claims 13 to 15, characterized in that the space (53) for receiving the fans (55, 56) is sealed off from the environment by means of a heat-insulating partition wall (52).

**Revendications**

1. Bâti périphérique pour portes ou fenêtres comportant deux montants (2, 3; 23) disposés à une certaine distance l'un de l'autre et conçus sous forme de profilés creux et deux traverses (4, 5; 22, 24) reliant les montants, soit la traverse supérieure et la traverse inférieure, disposées à une certaine distance l'une de l'autre, étant précisé que dans les montants sont disposés les échangeurs de chaleur (6, 7; 25) qui travaillent en récupération et qui sont reliés à au moins deux canaux d'écoulement (8, 9; 26, 27, 28, 29) que l'on peut relier respectivement aussi bien au local intérieur qu'à l'atmosphère extérieure et par lesquels on peut faire passer à travers les échangeurs de chaleur, au moyen de ventilateurs (10, 11), d'une part de l'air frais et d'autre part l'air du local, bâti caractérisé en ce que l'on peut conduire l'eau de condensation qui se dépose à partir de l'air du local au canal d'écoulement (9; 27, 29) pour l'air frais.

2. Bâti selon la revendication 1, caractérisé en ce que les ouvertures d'aspiration (15) pour l'air frais sont disposées dans la zone de la traverse supérieure (5; 22) et les ouvertures d'aspiration (13) pour l'air du local, dans la zone de la traverse inférieure (4; 24)

3. Bâti selon la revendication 1 ou 2, caractérisé en ce que les ouvertures de sortie (16; 39) pour l'air frais réchauffé sont disposées dans la zone de la traverse inférieure (4; 24) pour une sortie de l'air frais dirigée vers le haut.

4. Bâti selon l'une des revendications 1 à 3, caractérisé en ce que la traverse inférieure (4; 24) est conçue sous forme d'un profilé creux et présente deux chambres (34, 35) séparées l'une de l'autre, disposées l'une au-dessus de l'autre, dont la chambre inférieure (34) forme un espace de collecte pour l'air frais réchauffé dans les échangeurs de chaleur (6, 7; 25) et est réunie avec les ouvertures de sortie (16; 39) et dont la chambre supérieure (35) est conçue comme espace de collecte pour l'eau de condensation détachée de l'air du local.

5. Bâti selon la revendication 4, caractérisé en ce que la chambre supérieure (35) et la chambre inférieure (34) sont réunies l'une à l'autre par au moins une ouverture de passage du liquide (41).

6. Bâti selon l'une des revendications 1 à 5, caractérisé en ce que dans le canal d'écoulement (9) pour l'air frais, derrière l'échangeur de chaleur (6, 7; 25), dans le sens de l'écoulement, est disposé un dispositif de postchauffage de préférence électrique.

7. Bâti selon l'une des revendications 1 à 6, caractérisé en ce que l'échangeur de chaleur (6, 7; 25) est formé en faisant passer les canaux d'écoulement (8, 9) pour l'air frais et pour l'air du local en voisinage réciproque dans les montants (2, 3).

8. Bâti selon la revendication 7, caractérisé en ce que les canaux d'écoulement (8, 9) sont divisés en un certain nombre de canaux partiels (26, 27, 28, 29) qui sont respectivement et alternativement disposés l'un à côté de l'autre pour l'air du local et pour l'air frais.

9. Bâti selon l'une des revendications 1 à 8, caractérisé en ce que l'échangeur de chaleur est conçu sous forme d'un composant, en matériau du type tôle ou feuille, formant paroi et plié pour former des méandres, étant précisé que, respectivement, un pli de méandre forme un canal partiel (26, 27, 28, 29).

10. Bâti selon l'une des revendications 1 à 9, caractérisé en ce que la traverse inférieure et/ou la traverse supérieure (4, 5; 22, 24) sont conçues sous forme d'un profilé creux.

11. Bâti selon la revendication 9 et 10, caractérisé en ce que le composant formant paroi est amené jusque dans une zone médiane (36, 37) du volume creux de la traverse inférieure ou de la traverse supérieure (24 ou 22) et se raccorde, affleurant, avec une paroi séparatrice (30, 33) qui y est disposée horizontalement.

12. Bâti selon l'une des revendications 1 à 11, caractérisé en ce que les ventilateurs qui sont dans la traverse supérieure (5) sont disposés au moins approximativement l'un près de l'autre et décalés l'un par rapport à l'autre dans la hauteur de la traverse (5) et sont séparés par une paroi séparatrice (12) horizontale et présentant des plis.

13. Composant caissonné, en particulier caisse de volet roulant, pour emploi au-dessus du bâti conforme à l'une des revendications 1 à 13, caractérisé en ce qu'il est prévu un espace (53) pour recevoir au moins un ventilateur (55, 56), et en ce que l'espace (53) peut être relié aussi bien par des canaux d'écoulement pour l'échange de l'air frais et de l'air du local avec l'atmosphère extérieure quüaux canaux d'écoulement du bâti.

14. Composant caissonné selon la revendication 13, caractérisé en ce que le canal d'écoulement (57) pour l'air du local débouche, à l'état posé du composant caissonné (43), au voisinage immédiat de la vitre de la fenêtre ou du vantail de la porte pour une sortie dirigée vers le bas.

15. Composant caissonné selon la revendication 13 ou 14, caractérisé en ce que les canaux d'écoulement (57, 58) du composant caissonné (53) pour l'air frais et pour l'air du local sont disposés latéralement à une certaine distance l'un de l'autre.

16. Composant caissonné selon l'une des revendications 13 à 15 caractérisé en ce que l'espace (53) de réception des ventilateurs (55, 56) est rendu étanche à l'égard de l'atmosphère extérieure au moyen d'une paroi séparatrice (52) thermiquement isolante.

0 112 572

Fig. 1

# Fig. 2

Fig. 3